# EUROPÄISCHE PATENTANMELDUNG

(11) **EP 1 203 795 A1**
(43) Veröffentlichungstag der Anmeldung: **08.05.2002**
(21) Anmeldenummer: 01125518.9
(22) Anmeldetag: 25.10.2001
(51) Int. Cl.: C09C 1/00

(54) **Nachbeschichtung von Perlglanzpigmenten mit hydrophoben Kupplungsreagenzien**

(30) Priorität: 06.11.2000 DE 10054981
(71) Anmelder: MERCK PATENT GmbH, 64293 Darmstadt (DE)
(72) Erfinder: Glausch, Ralf, 64367 Mühltal (DE)
(74) Vertreter: Leifert, Elmar, Dr.

(57) **Zusammenfassung**

Perlglanzpigmente auf der Basis eines mit Metalloxiden beschichteten, plättchenförmigen Substrates und einer auf der Metalloxidschicht befindlichen Deckschicht, wobei die Deckschicht eine mehrschichtige Struktur besitzt, die aus einer ersten Schicht, die ein Hydroxid oder Oxidhydrat der Elemente Aluminium oder Silicium enthält, einer zweiten Schicht, die mindestens ein Hydroxid oder Oxidhydrat der Elemente Aluminium, Silicium, Cer oder Zirkon, ausgenommen das Hydroxid oder Oxidhydrat, das die erste Schicht bildet, enthält, und einer dritten Schicht, die mindestens ein organisches hydrophobes Kupplungsreagenz enthält, besteht. Ferner werden ein Herstellungsverfahren und die Verwendung der Pigmente in Lacken, Farben, Kunststoffen Coatings und Kosmetika beschrieben.

## Beschreibung

Die Erfindung betrifft hydrophob nachbeschichtete Perlglanzpigmente, sowie ein Verfahren zu deren Herstellung. Des Weiteren betrifft die Erfindung die Verwendung dieser Pigmente.

Aus EP 0 632 109 ist beispielsweise bekannt, dass Perlglanzpigmente für Überzugsmittel einer Nachbehandlung unterzogen werden, um ihre Stabilität zu verbessern. Bei dieser Nachbehandlung werden die Pigmente mit einer Schicht enthaltend Siliciumdioxid, Aluminiumoxid, Chromoxid und/oder Zirkoniumoxid und einer Schicht enthaltend ein organofunktionelles Kupplungsreagenz, z.B. hydrophile Silane oder Zirkoniumaluminate beschichtet.

Die in EP 0 632 109 verwendeten organofunktionellen Silane besitzen die folgende Grundstruktur:

Y-(CH₂)ₙ-SiX₃

worin Y eine organofunktionelle Gruppe, z.B. eine Amino-, Methacryl-, Vinyl-und/oder Epoxygruppe ist und X für eine siliciumfunktionelle Gruppe steht, die nach ihrer Hydrolyse mit aktiven Stellen eines anorganischen Substrats oder durch Kondensation mit anderen Siliciumverbindungen reagiert. Es kann sich hierbei beispielsweise um eine Alkoxygruppe handeln.

Die hydrophilen Gruppen Y reagieren mit den Polymeren eines Überzugsmittels unter Bindungsbildung, während die siliciumfunktionelle Gruppe X mit der Pigmentoberfläche reagiert.

Weitere hydrophile und reaktive Y-Gruppen enthaltende Silankupplungsreagentien zur Nachbeschichtung von Glimmerpigmenten sind aus US 5,759,255 bekannt.

Aus WO89/13426 sind Beschichtungen mit wasserbasierenden komplexen oligomeren Silansystemen bekannt.

Bei Verwendung der oben genannten hydrophilen organofunktionellen Kupplungsreagenzien in wässrigen Systemen bauen diese Reagenzien eine Wasserschicht auf der Pigmentoberfläche auf. Dies hat eine Blasenbildung und Quellung des Überzugsmittels zur Folge, wodurch die Adhäsion des Überzugsmittels zum Substrat herabgesetzt wird.

Ein weiterer Nachteil bei der Nachbeschichtung mittels hydrophiler reaktiver Silane ist die Förderung der Osmose, die sich negativ auf das Überzugsmittel auswirken kann.

Die Aufgabe der Erfindung ist es, diese Nachteile zu überwinden und gegenüber dem Stand der Technik vorteilhafte Pigmente bereitzustellen, die vor allem in ihrer Stabilität in Überzügen und der gleichzeitigen Verbesserung weiterer Anwendungseigenschaften, wie der verminderten Blasenbildung, der Benetzung und Adhäsion, sowie dem Quellungsverhalten, verbessert sind.

Diese Aufgabe wird erfindungsgemäß gelöst, indem ein mit hydrophoben Kupplungsreagenzien behandeltes Perlglanzpigment zur Verfügung gestellt wird, bei welchem keine chemische Bindung zwischen dem Polymer und dem organofunktionellen Teil ausgebildet wird.

Namentlich werden nachbeschichtete Perlglanzpigmente auf der Basis eines mit Metalloxiden beschichteten, plättchenförmigen Substrates und einer auf der Metalloxidschicht befindlichen Deckschicht, die eine mehrschichtige Struktur besitzt, die aus einer ersten Schicht, die ein Hydroxid oder Oxidhydrat der Elemente Aluminium oder Silicium enthält, einer zweiten Schicht, die mindestens ein Hydroxid oder Oxidhydrat der Elemente Aluminium, Silicium, Cer oder Zirkon, ausgenommen das Hydroxid oder Oxidhydrat, das die erste Schicht bildet, enthält, und einer dritten Schicht, die mindestens ein organisches hydrophobes Kupplungsreagenz enthält, besteht zur Verfügung gestellt.

Die Perlglanzpigmente vor der Nachbeschichtung (Substrate) sind Pigmente, die aus einem plättchenförmigen Material, beispielsweise Glimmer, Kaolin oder Glas und einer oder mehreren darauf abgeschiedenen Metalloxidschichten bestehen. Die Metalloxidschicht kann beispielsweise aus Titandioxid, Titandioxid im Gemisch mit Eisen(III)oxid, Eisen(III)oxid, Chromoxid, Zirkondioxid, Zinndioxid oder Zinkoxid bestehen. Derartige Pigmente sind im Handel unter der Bezeichnung Iriodin® (Hersteller E. Merck, Darmstadt) erhältlich.

Das Kupplungsreagenz wird vorzugsweise aus der Gruppe der Silane gewählt, wobei diese Verbindungen mindestens eine funktionelle Gruppe, gewählt aus geradkettigen oder verzweigten Alkylgruppen mit 3 bis 18 Kohlenstoffatomen, die gegebenenfalls mit Fluor substituiert sind, Arylgruppen, die gegebenenfalls mit C₁-C₁₀-Alkylgruppen und/oder Nitrogruppen substituiert sind, tragen.

Unter den oben genannten Kupplungsreagenzien sind besonders die Aryl-, Alkyl-und Fluoralkyl-substituierten Di- und Trimethoxysilane bevorzugt. Hierzu gehören zum Beispiel Ethoxyphenyltrimethoxysilan, Propyltrimethoxysilan, Butyltrimethoxysilan, Isobutyltrimethoxysilan, Hexyltrimethoxysilan, Octyltrimethoxysilan, 1H,1H,2H,2H-Perfluordecyltrimethoxysilan und (3,3,3-Trifluoropropyl)methyldimethoxysilan.

Eine weitere Aufgabe bestand in der Bereitstellung eines Verfahrens zur Gewinnung der erfindungsgemäßen Perlglanzpigmente.

Diese Aufgabe wurde gelöst durch die Bereitstellung eines mehrstufigen Verfahrens, in welchem man das mit Metalloxiden beschichtete Substrat in Wasser suspendiert, auf 30 bis 100°C, vorzugsweise 40 bis 75 °C erhitzt und einen pH-Wert von 3 bis 9, vorzugsweise 6 bis 7 einstellt, in einer ersten Stufe eines oder mehrere wasserlösliche Metallsalze zufügt, diese ganz oder teilweise als Metallhydroxide und/oder Metalloxidhydrate abscheidet, in einer zweiten Stufe durch Zugabe mindestens eines wasserlöslichen Silikats, Aluminium-, Cer- und/oder Zirkonsalzes bei einem pH-Wert im Bereich von 3 bis 9, vorzugsweise 6 bis 7, die entsprechenden Hydroxide oder Oxidhydrate davon abscheidet und in einer dritten Stufe mindestens ein organisches hydrophobes Kupplungsagens zusetzt und dieses bei einem pH-Wert von 3 bis 9, vorzugsweise 6 bis 8 an der abgeschiedenen Oxidhydratschicht bindet. Anschließend kann das so erhaltene Pigment durch Sedimentation, Waschen und Filtration abtrennt und bei 80 bis 160 °C, vorzugsweise 120 bis 160 °C getrocknet werden.

Bei Bedarf kann zwischen der zweiten und dritten Stufe eine Sedimentation des Pigments als Reinigungsschritt durchgeführt werden.

Die im erfindungsgemäßen Verfahren eingesetzten Metallhydroxide bzw. Metalloxidhydrate sind Hydroxide bzw. Oxidhydrate von Aluminium, Silicium, Zirkonium und Cer, vorzugsweise von Aluminium und Silicium.

Als Kupplungsagenzien werden bevorzugt die oben genannten eingesetzt.

Die erfindungsgemäß beschichteten Perlglanzpigmente finden vor allem bei der Pigmentierung von Farben, wie z.B. Druckfarben und Kunststoffen, wie z.B. Kunststofffolien, sowie Überzugsmitteln, wie z.B. Lacken Verwendung. Sie finden jedoch auch in anderen Bereichen, in denen die oben genannten verbesserten Eigenschaften eine Rolle spielen, wie z.B. der Pigmentierung von Kosmetika, Verwendung.

Im Folgenden soll die Erfindung anhand von Beispielen verdeutlicht werden.

### Beispiele

Verschiedene Perlglanzpigmente wurden in einem Nachbehandlungsverfahren unter Verwendung hydrophober Silane gemäß Tabelle 1 beschichtet.

**Tabelle 1:**

| Nachbehandlungen von Perlglanzpigmenten | | | |
|---|---|---|---|
| Beispiel-Nr. | Basispigment | anorganischer Teil der Nachbehandlung | organofunktioneller Teil |
| 1 | Iriodin® 504 | 1,2 % AIO(OH) 1,5 % SiO₂ | 4,5 % P01080 Alkylsilan |
| 2 | Iriodin® 225 | 1,2 % AlO(OH) 1,5 % SiO₂ | 4,5 % P01080 Alkylsilan |
| 3 | Iriodin® 504 | 1,2 % AlO(OH) 1,5 % SiO₂ | 3,0 % F 8261 Fluorsilan |
| 4 | Iriodin® 225 | 1,2 % AIO(OH) 1,5 % SiO₂ | 3,0 % F 8261 Fluorsilan |
| 5 | Iriodin® 504 | 1,2 % AlO(OH) 1,5 % SiO₂ | 3,0 % P01080 Alkylsilan |
| 6 | Iriodin® 225 | 1,2 % AIO(OH) 1,5 % SiO₂ | 3,0 % P01080 Alkylsilan |
| 7 | Iriodin® 225 | 1,5 % SiO₂ 1,2 % AIO(OH) 0,5 % CeO₂ | 3,0 % F 8261 Fluorsilan |
| 8 | Iriodin® 504 | 1,4 % SiO₂ 1,3 % ZrO₂ 0,5 % CeO₂ | 2,5 % P01080 Alkylsilan |
| F 8261: DYNASYLAN F8261, CAS [51851-37-7], C₁₄H₁₉F₁₃O₃Si, (ABCR GmbH & Co. KG, Karlsruhe) | | | |
| P01080: Trimethoxybutylsilan, (ABCR GmbH & Co. KG, Karlsruhe) | | | |
| Iriodin ® 504: rotes Perlglanzpigment auf Glimmerbasis mit Eisenoxidbelegung | | | |
| Iriodin ® 225: blaues Perlglanzpigment auf Glimmerbasis mit Rutilbelegung | | | |

### Kondenswasserprüfung

Die Pigmentproben 1 bis 6 (Tabelle 1) wurden in ein Wasserlacksystem auf Basis eines Acrylatbindemittels eingearbeitet und die Prüfproben per Spritzapplikation hergestellt.
Die Proben wurden mittels einer Kondenswasserprüfung nach DIN 50017 bewittert und eine Stunde nach Beanspruchungsende bewertet.
Die Bewertung der Blasenbildung erfolgte visuell nach DIN 53209. "m" ist hierbei ein Maß für die Anzahl der Blasen pro Flächeneinheit, während "g" ein Maß für die Größe der Blasen darstellt. Die Bewertungsskala reicht von 0 (sehr gut) bis 5 (sehr schlecht).

Die Quellung wurde ebenfalls visuell nach DIN 53230 beurteilt. Die relative Bewertungsskala reicht von 0 (nicht verändert) bis 5 (sehr stark verändert).
Die Adhäsion wurde visuell gemäß DIN 53151 bestimmt, wobei die relative Bewertungsskala von 0 (sehr gut) bis 5 (sehr schlecht) reicht.

Tabelle 2 enthält die Prüfungsergebnisse der Proben 1 bis 6, sowie der Vergleichsproben mit Iriodin® 225 WR II und Iriodin® 504 WR II und einer pigmentfreien Nullprobe als Wasserklarlack. Iriodin® 225 WR II und Iriodin® 504 WR II unterscheiden sich von den in den Proben 1 bis 6 eingesetzten Iriodinen dadurch, dass "WR "II"-Iriodine eine bekannte ZrO₂-Nachbeschichtung aufweisen.

**Tabelle 2:**

| Prüfungsergebnisse der nachbehandelten Pigmente bei der Kondenswasserprüfung | | | |
|---|---|---|---|
| Beispiel-Nr. | Blasenbildung | Quellung | Adhäsion |
| 1 | m 1/g 1 | Q 1 | 0-1 |
| 2 | m 0/g 0 | Q 0 | 0 |
| 3 | m 1 / g 1 | Q 0-1 | 1 |
| 4 | m 0 / g 0 | Q 0-1 | 0 |
| 5 | m 1/g 1 | Q 0-1 | 0 |
| 6 | m 0 / g 0 | Q 0 | 0 |
| 7 | m 0 / g 0 | Q 0-1 | 0-1 |
| 8 | m 1/g 1 | Q 1 | 0-1 |
| Iriodin® 225 WR II | m 2/g 1 | Q 1-2 | 1-2 |
| Iriodin® 504 WR II | m 3 / g 4 | Q 3-4 | 4 |
| Nullprobe | m 0 / g 0 | Q 0 | 0 |

### Herstellungsbeispiel (Beispiele 1 - 6) für den folgenden Schichtaufbau:

Schicht 1: SiO₂; Schicht 2: AIO(OH); Schicht 3: hydrophobes Silan

25 g des Pigments werden in 300 ml deionisiertem Wasser suspendiert. Anschließend wird auf 75 °C erwärmt und der pH-Wert mit verdünnter Schwefelsäure oder verdünnter Natronlauge auf 6,5-7,0 eingestellt. Der pH-Wert wird hier, wie im Folgenden mittels eines Indikators kontrolliert.
Anschließend wird eine Lösung von 1,12 g AlCl₃·6H₂O in 10 ml deionisiertem Wasser über einen Zeitraum von zwei Stunden der Suspension zugegeben, wobei 2,5 %-ige Natronlauge verwendet wird, um den pH-Wert zwischen 6,5 und 7,0 zu halten. Nach vollständiger Zugabe wird weitere 10 min unter Beibehaltung des gleichen pH-Werts gerührt.
Anschließend werden 1,38 g einer 38,5 %-igen Natriumsilikatlösung, gelöst in 10 ml deionisiertem Wasser, über einen Zeitraum von zwei Stunden der Suspension zugegeben, wobei 5 %-ige Schwefelsäure verwendet wird, um den pH-Wert zwischen 6,5 und 7,0 zu halten. Nach vollständiger Zugabe wird weitere 10 min unter Beibehaltung des gleichen pH-Werts gerührt. Danach wird das gesamte Pigment sedimentiert und resuspendiert.
Anschließend wird 1 g des jeweiligen hydrophoben Kupplungsagens über einen Zeitraum von einer Stunde bei einem pH-Wert von 6,5 bis 7,0 zugegeben, wobei dieser mit oben genannter Schwefelsäure konstant gehalten wird. Nach vollständiger Zugabe wird weitere 30 min gerührt.
Danach wird der Reaktor mit deionisiertem Wasser gefüllt. Das Pigment wird sedimentiert, der Überstand bis auf einige cm über dem Pigmentbett dekantiert, worauf mit dem Ursprungsvolumen deionisierten Wassers wiederaufgeschlämmt und 5 min bei einem pH-Wert von 6,5 bis 7,0 gerührt wird.
Anschließend wird das Pigment abfiltriert, mit 500 ml deionisierten Wassers vorsichtig gewaschen, mittels einer Luftstrom-Filterpresse filtriert und über Nacht in einem Ofen bei 150 °C getrocknet.
Um verschiedene Teilchengrößen zu erhalten, können mittels einer geeigneten Siebvorrichtung verschiedene Fraktionen getrennt werden.

### Herstellungsbeispiel (Beispiel 7) für folgenden Schichtaufbau:

Schicht 1: SiO₂; Schicht 2: AlO(OH)/CeO₂; Schicht 3: hydrophobes Silan

100 g Iriodin ® 225 Rutil Perlblau werden in 900 ml vollentsalztem Wasser suspendiert und unter kräftigem Rühren auf 40 °C aufgeheizt. Mit 2,5 %-iger Natronlauge wird ein pH-Wert von 9,0 eingestellt (alle pH-Werte werden mit eines geeigneten pH-Indikatorpapiers bestimmt). Anschließend läßt man innerhalb von 30 min eine Lösung von 2,7 ml Natronwasserglas (370 g SiO₂ pro Liter) in 150 ml vollentsalztem Wasser zur Pigmentsuspension tropfen. Der pH-Wert wird dabei mit 2,5 %-iger Salzsäure konstant gehalten. Nach Beendigung der Zugabe wird weitere 15 min bei 40 °C gerührt. Anschließend wird innerhalb von 10 min der pH-Wert mit 2,5 %-iger Salzsäure auf 6,5 eingestellt, worauf nochmals 15 min bei 40 °C nachgerührt wird. Nun werden 1,35 g Natriumsulfat, 2,30 g Aluminiumchlorid-Hexahydrat und 1,10 g Cer-(III)-chlorid-Heptahydrat als Feststoffe der Suspension zugegeben, wobei der pH-Wert auf 4,0 fällt.
Anschließend wird innerhalb von 20 min auf 75 °C erwärmt und weitere 75 min bei dieser Temperatur gerührt, wobei der pH-Wert auf 3,3, fällt.
Nun werden 3,0 g Dynasilan F 8261 (ABCR GmbH & Co. KG, Karlsruhe) pur innerhalb von 10 min zugegeben, wobei der pH-Wert mit oben genannter Salzsäure konstant gehalten wird. Nach Beendigung der Zugabe wird 2 h bei 75 °C nachgerührt, wobei das Silan vollständig hydrolysiert und mit der Pigmentoberfläche reagiert.
Anschließend wird mit 2,5 %-iger Natronlauge sehr langsam innerhalb von 60 min der pH-Wert auf 8,0 eingestellt. Dabei werden die Oxide, Hydroxide und/oder Oxidhydrate abgeschieden und das Silan an der abgeschiedenen Oxidhydratschicht gebunden.
Anschließend wird noch 1 h zwecks Nachreaktion bei 75 °C weiter gerührt, wobei der pH-Wert auf 7,0 fällt.
Das Produkt wird über eine Filternutsche abgesaugt, mit vollentsalztem Wasser salzfrei gewaschen und etwa 16 h bei 140°C getrocknet.

### Herstellungsbeispiel (Beispiel 8) für folgenden Schichtaufbau:

Schicht 1: SiO₂; Schicht 2: ZrO₂/CeO₂; Schicht 3: hydrophobes Silan

100 g Iriodin ® 504 Rot werden in 900 ml vollentsalztem Wasser suspendiert und unter kräftigem Rühren auf 40 °C aufgeheizt. Mit 2,5 %-iger Natronlauge wird ein pH-Wert von 9,0 eingestellt (alle pH-Werte werden mit eines geeigneten pH-Indikatorpapiers bestimmt). Anschließend läßt man innerhalb von 30 min eine Lösung von 2,7 ml Natronwasserglas (370 g SiO₂ pro Liter) in 150 ml vollentsalztem Wasser zur Pigmentsuspension tropfen. Der pH-Wert wird dabei mit 2,5 %-iger Salzsäure konstant gehalten. Nach Beendigung der Zugabe wird weitere 15 min bei 40 °C gerührt. Anschließend wird innerhalb von 10 min der pH-Wert mit 2,5 %-iger Salzsäure auf 6,5 eingestellt, worauf nochmals 15 min bei 40 °C nachgerührt wird. Anschließend läßt man innerhalb von 15 min eine Lösung von 1,35 g Natriumsulfat, 4,92 g Zirkonium(IV)oxichlorid-Octahydrat, 1,10 g Cer-(III)-chlorid-Heptahydrat und 2 ml 10 %-ige Salzsäure in 100 ml vollentsalztem Wasser in die Suspension tropfen, wobei der pH-Wert auf 2,5 fällt.
Anschließend wird innerhalb von 20 min auf 75 °C erwärmt und weitere 75 min bei dieser Temperatur gerührt, wobei der pH-Wert auf 3,3, fällt.
Nun werden 3,0 g Dynasilan P 01080 (Trimethoxybutylsilan von ABCR GmbH&Co. KG, Karlsruhe) pur, innerhalb von 10 min zugegeben, wobei der pH-Wert mit oben genannter Salzsäure konstant gehalten wird. Nach Beendigung der Zugabe wird 2 h bei 75 °C nachgerührt, wobei das Silan vollständig hydrolysiert und mit der Pigmentoberfläche reagiert.
Anschließend wird mit 2,5 %-iger Natronlauge sehr langsam innerhalb von 60 min der pH-Wert auf 8,0 eingestellt. Dabei werden die Oxide, Hydroxide und/oder Oxidhydrate abgeschieden und das Silan an der abgeschiedenen Oxidhydratschicht gebunden.
Anschließend wird noch 1 h zwecks Nachreaktion bei 75 °C weiter gerührt, wobei der pH-Wert auf 7,0 fällt.
Das Produkt wird über eine Filternutsche abgesaugt, mit vollentsalztem Wasser salzfrei gewaschen und etwa 16 h bei 140°C getrocknet.

## Patentansprüche

1. Perlglanzpigmente auf der Basis eines mit Metalloxiden beschichteten, plättchenförmigen Substrates und einer auf der Metalloxidschicht befindlichen Deckschicht, **dadurch gekennzeichnet, dass** die Deckschicht eine mehrschichtige Struktur besitzt, die aus einer ersten Schicht, die ein Hydroxid oder Oxidhydrat der Elemente Aluminium oder Silicium enthält, einer zweiten Schicht, die mindestens ein Hydroxid oder Oxidhydrat der Elemente Aluminium, Silicium, Cer oder Zirkon, ausgenommen das Hydroxid oder Oxidhydrat, das die erste Schicht bildet, enthält und einer dritten Schicht, die mindestens ein organisches hydrophobes Kupplungsreagenz enthält, besteht.

2. Perlglanzpigment nach Anspruch 1, **dadurch gekennzeichnet, dass** das Kupplungsreagenz ein Silan ist und mindestens eine funktionelle Gruppe, gewählt aus geradkettigen oder verzweigten Alkylgruppen mit 3 bis 18 Kohlenstoffatomen, die gegebenenfalls mit Fluor substituiert sind, Arylgruppen, die gegebenenfalls mit C₁-C₁₀-Alkylgruppen und/oder Nitrogruppen substituiert sind, trägt.

3. Verfahren zur Herstellung eines Perlglanzpigments nach einem der Ansprüche 1 oder 2, auf der Basis eines mit Metalloxiden beschichteten, plättchenförmigen Substrats und einer auf der Metalloxidschicht befindlichen Deckschicht **dadurch gekennzeichnet, dass** man das mit Metalloxiden beschichtete Substrat in Wasser suspendiert, auf 30 bis 100 °C, vorzugsweise 40 bis 75 °C erhitzt und einen pH-Wert von 3 bis 9, vorzugsweise 6 bis 7 einstellt, in einer ersten Stufe eines oder mehrere wasserlösliche Metallsalze zufügt, diese ganz oder teilweise als Metallhydroxide und/oder Metalloxidhydrate abscheidet, in einer zweiten Stufe durch Zugabe mindestens eines wasserlöslichen Silikats, Aluminium-, Cer- und/oder Zirkonsalzes bei einem pH-Wert im Bereich von 3 bis 9, vorzugsweise 6 bis 7, die entsprechenden Hydroxide oder Oxidhydrate davon abscheidet und in einer dritten Stufe mindestens ein organisches hydrophobes Kupplungsagens zusetzt und bei einem pH-Wert von 3 bis 9, vorzugsweise 6 bis 8 dieses an der abgeschiedenen Oxidhydratschicht bindet.

4. Verfahren nach Anspruch 3, **dadurch gekennzeichnet, dass** nach der dritten Stufe das Pigment durch Sedimentation, Waschen und Filtration abgetrennt und bei 80 bis 160 °C, vorzugsweise 120 bis 160 °C getrocknet wird.

5. Verfahren nach einem der Ansprüche 3 oder 4, **dadurch gekennzeichnet, dass** das Metallhydroxid bzw. Metalloxidhydrat ein Hydroxid bzw. Oxidhydrat von Aluminium oder Silicium ist.

6. Verfahren nach einem oder mehreren der Ansprüche 3 bis 5, **dadurch gekennzeichnet, dass** das Kupplungsreagenz ein Silan, ist und mindestens eine funktionelle Gruppe, gewählt aus geradkettigen oder verzweigten Alkylgruppen mit 3 bis 18 Kohlenstoffatomen, die gegebenenfalls mit Fluor substituiert sind, Arylgruppen, die gegebenenfalls mit C₁-C₁₀-Alkylgruppen und/oder Nitrogruppen substituiert sind trägt.

7. Verwendung des Perlglanzpigments nach den Ansprüchen 1 bis 5 zur Pigmentierung von Lacken, Farben, Kunststoffen, Coatings und Kosmetika.

8. Lacken, Farben, Kunststoffen, Coatings und Kosmetika, die mit einem Perlglanzpigment nach den Ansprüchen 1 bis 5 pigmentiert sind.
